# EUROPEAN PATENT APPLICATION

(11) **EP 4 649 866 A1**
(43) Date of publication of application: **19.11.2025**
(21) Application number: 24198772.6
(22) Date of filing: 05.09.2024
(51) Int. Cl.: A47J 41/02

(54) **INSULATION CONTAINER AND CAPPED CONTAINER**

(30) Priority: 17.05.2024 JP 2024810070
(71) Applicant: Thermos L.L.C., Schaumburg, IL 60173 (US); Thermos K.K., Tsubame-shi, Niigata-ken (JP)
(72) Inventor: BABA, Keita, Niigata-ken (JP); FUJITA, Mamoru, Niigata-ken (JP)
(74) Representative: Barker Brettell LLP

(57) **Abstract**

An insulation container that enables the precise joining of the joining ends of the bottom member and the body member constituting the outer container, while also achieving well-finished joining ends. An insulation container 1A having a vacuum insulation layer 6 provided between an outer container 4 and an inner container, wherein the outer container 4 includes a bottomed cylindrical bottom member 41 forming the bottom 4a side and a cylindrical body member 42 forming the body part 4b side, wherein the bottom member 41 has an inner joining end 40a formed by bending the open end 41b of the bottom member 41 inward while folding it upward from the periphery of the bottom 4a of the bottom member 41, along with an outer joining end 40b including a lower open end 42b of the body member 42 that extends vertically downward, wherein the outer surface of the inclined part 41d and the inner surface of the lower open end 42b face each other, and the abutting parts 41a, 42a between the inner joining end 40a and the outer joining end 40b are joined together.

## Description

### Technical Field

The present invention relates to an insulation container and a capped container.

### Background Art

For example, an insulation container exists which has a metal outer container and inner container with one open end, wherein the inner container is housed inside the outer container and the open ends of both the outer container and the inner container are joined together, with a vacuum insulation layer provided between the outer container and the inner container. Such an insulation container is widely used in beverage containers such as water bottles and mugs with heat-retention and cooling functions, as well as in food containers and cooking utensils with heat-retention functions.

Incidentally, in the abovementioned insulation container, the joining ends of the bottomed cylindrical bottom member forming the bottom side of the outer container and the cylindrical body member forming the body part side of the outer container are aligned and joined by welding (see, for example, Patent Documents 1 and 2 below).

In the invention described in Patent Document 1 below, a resin bottom cover is attached to cover the joining part of the bottom member and the body member constituting the outer container, i.e., the bottom side. However, when such a bottom cover is attached, it not only increases the number of components but also adds to the weight.

In contrast, in the invention described in Patent Document 2 below, the bottom member and the body part which constitute the outer container are joined by providing a peripheral raised part of the bottom member at a position facing the end of the body part. The end of the body part engages with the step of the peripheral raised part and the step of the bottom member and the end of the body part are welded together. However, in such a structure, dimensional differences are provided in advance between the peripheral raised part of the bottom member and the body part, making dimensional control difficult. As a result, after welding, a step is formed on the side of the outer container, compromising its aesthetic appearance.

Patent documents in the technological field include Japanese Patent Application Publication No. 10-14786 (document 1) and Japanese Patent Application Publication No. 2011-206408 (document 2).

The present invention has been created in view of the abovementioned problems, with the object of providing an insulation container, wherein a vacuum insulation layer is provided between an outer container and an inner container, which enables the precise joining of the joining ends of the bottom member and the body member constituting the outer container, while also achieving well-finished joining parts, in addition to providing a capped container equipped with such an insulation container.

In order to achieve the abovementioned purpose, the present invention provides the following means.
[1] An insulation container having a metal outer container and inner container with one open end, wherein the inner container is housed inside the outer container and the open end sides of both the outer container and the inner container are joined together, with a vacuum insulation layer provided between the outer container and the inner container,
   wherein the outer container includes a bottomed cylindrical bottom member forming the bottom side and a cylindrical body member forming the body part side,
   wherein the bottom member has an inner joining end formed by bending the open end of the bottom member inward while folding it upward from the periphery of the bottom of the bottom member, along with an outer joining end including the lower open end of the body member, and
   wherein the outer surface of the inclined part and the inner surface of the lower open end face each other and the abutting parts between the inner joining end and the outer joining end are joined together.
[2] The insulation container according to [1], wherein the abutting part of the inner joining end is positioned at a corner in which the bottom of the bottom member is bent or at the inclined part.
[3] The insulation container according to [1], wherein the lower open end extends vertically downward.
[4] The insulation container according to [1], wherein the open end of the bottom member is bent so as to be positioned between the inner surface of the bottom and the lower open end of the body member.
[5] The insulation container according to [1], wherein the body member has a taper part gradually reducing in diameter upward.
[6] The insulation container according to [1], wherein the bottom member has a concentric uneven structure on the bottom thereof.
[7] A capped container, comprising: the insulation container according to any one of [1] to [6]; and a cap unit attached to the insulation container.

As described above, the present invention provides an insulation container, wherein a vacuum insulation layer is provided between an outer container and an inner container, which enables the precise joining of the joining ends of the bottom member and the body member constituting the outer container, while also achieving well-finished joining parts, in addition to providing a capped container equipped with such an insulation container.

### Brief Description of Drawings

Fig. 1 is a side view illustrating the appearance of an insulation container according to Embodiment 1 of the present invention.
Fig. 2 is a cross-sectional view illustrating the structure of the insulation container illustrated in Fig. 1.
Fig. 3 is a cross-sectional view of the insulation container with the encircled area A illustrated in Fig. 2 enlarged.
Fig. 4 is a perspective view illustrating the appearance of a capped container according to Embodiment 2 of the present invention.
Fig. 5 is a cross-sectional view illustrating the structure of the capped container illustrated in Fig. 4.
Fig. 6 is a cross-sectional view of the insulation container with the encircled area B illustrated in Fig. 5 enlarged.

### Description of Embodiments

Hereinafter, the embodiments of the present invention will be described in detail with reference to the drawings.

### (Embodiment 1)

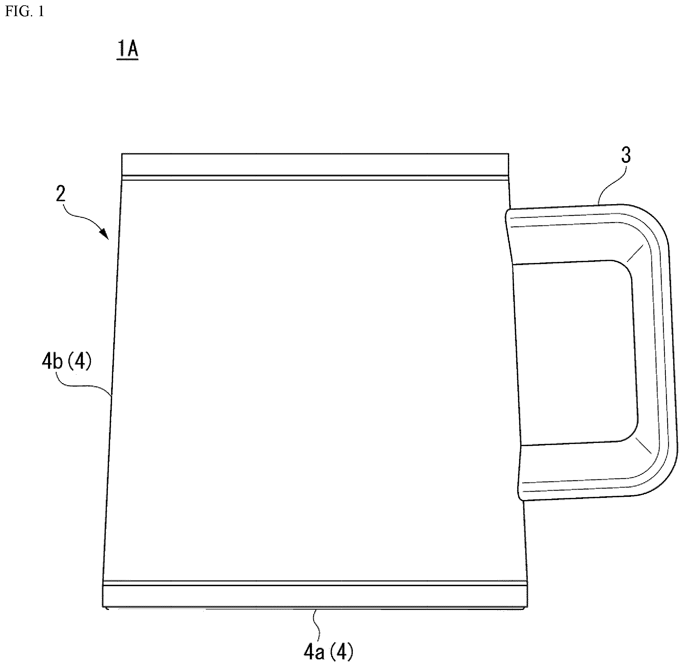

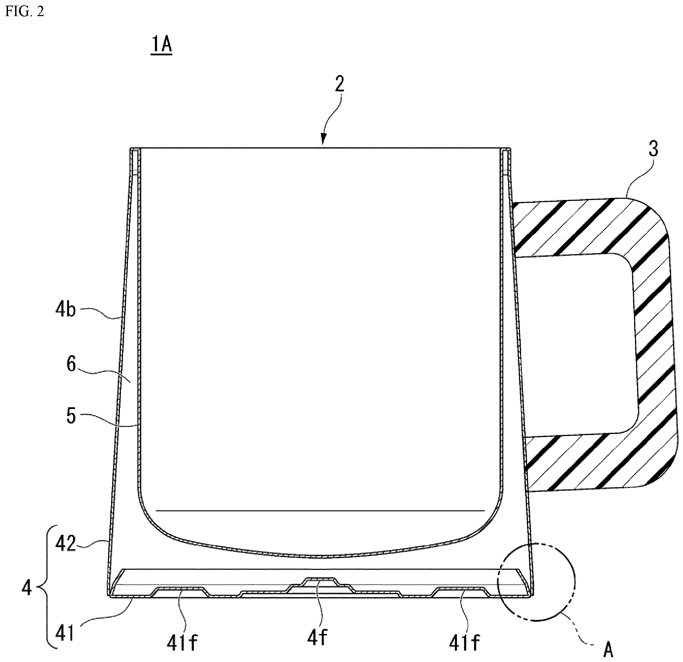

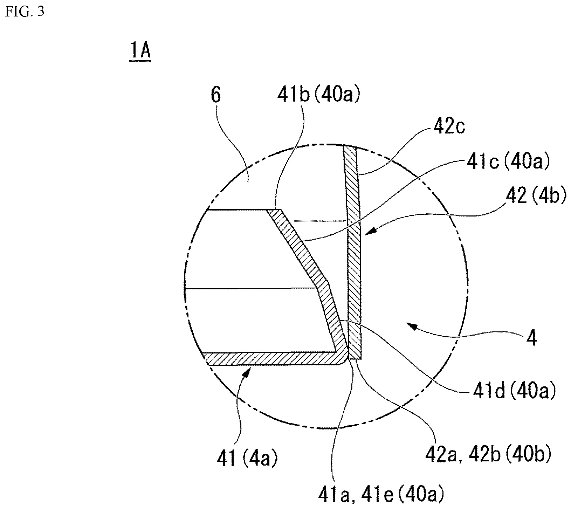

First, as Embodiment 1 of the present invention, the insulation container 1A illustrated in Figs. 1 to 3 will be described. Note that Fig. 1 is a side view illustrating the appearance of the insulation container 1A. Fig. 2 is a cross-sectional view illustrating the structure of the insulation container 1A. Fig. 3 is a cross-sectional view of the insulation container 1A with the encircled area A illustrated in Fig. 2 enlarged.

The insulation container 1A of the present embodiment, as illustrated in Figs. 1 to 3, comprises a container body 2 with a vacuum insulation structure and a handle member 3 attached to the side of the container body 2. The present invention is applied to a mug capable of keeping the beverage (liquid) contained in the container body 2 warm or cold.

The container body 2 is composed of a double-structure container, for example, having a bottomed cylindrical outer container 4 and an inner container 5 made of stainless steel, etc., with the inner container 5 housed inside the outer container 4 and the open ends of both containers joined together. Moreover, a vacuum insulation layer 6 is provided between the outer container 4 and the inner container 5. The vacuum insulation layer 6 can be formed by sealing the degassing hole provided at the bottom 4a of the outer container 4 in a chamber depressurized (evacuated) to a high vacuum, for example.

The handle member 3 is the part grasped by the user, extending vertically and having both ends bent in the same direction. The handle member 3 is attached at both ends to the side of the outer container 4 by screws, etc.

In the present embodiment, the container body 2 consists of the outer container 4 and the inner container 5, both formed in a bottomed cylindrical shape, wherein the outer container 4 has a taper shape that gradually reduces in diameter upward. Note that the shape of the insulation container 1A is not particularly limited, with modifications capable of being made to the shapes of the container body 2 and the handle member 3 as appropriate in order to match the size, design, etc. Moreover, the outer surface of the outer container 4 may also be painted, printed, etc.

In the insulation container 1A of the present embodiment, the outer container 4 is composed of a bottomed cylindrical bottom member 41 forming the bottom 4a side and a cylindrical body member 42 forming the body part 4b side.

In the insulation container 1A of the present embodiment, with the inner container 5 housed inside the body member 42 and the open ends of both containers facing each other, this abutting part is joined by welding. Subsequently, with the bottom member 41 and the body member 42 fitted together, the abutting parts are joined by welding, thereby forming the outer container 4 and the container body 2.

Note that in addition to the stainless steel mentioned above, metals such as titanium, aluminum, magnesium, or alloys thereof may also be used for the outer container 4 (bottom member 41 and body member 42) and the inner container 5. Further, welding methods such as laser welding are used for the welding joint.

Moreover, in Fig. 2, the joining parts (boundaries) between the inner container 5 and the body member 42 and between the bottom member 41 and the body member 42 are illustrated, and after welding, these joining parts are melted by welding, forming a weld bead around the entire circumference of the joining parts. Moreover, this weld bead is then finished to a smooth surface through grinding and polishing after welding.

Incidentally, in the insulation container 1A of the present embodiment, as illustrated in Fig. 3, the outer container 4 has an inner joining end 40a and an outer joining end 40b that are joined together at the abutting parts 41a, 42a between the bottom member 41 and the body member 42 (hereinafter, referred to as the "abutting parts").

Specifically, the inner joining end 40a includes a curve part 41c formed by bending the open end 41b of the bottom member 41 inward while folding it upward from the periphery of the bottom 4a of the bottom member 41, along with an inclined part 41d formed by flattening a part of the outer surface of the curve part 41c. In contrast, the outer joining end 40b includes a lower open end 42b extending vertically downward from the body member 42.

The curve part 41c is bent such that the open end 41b of the bottom member 41 is positioned between the inner surface of the bottom 4a and the inner surface of the lower open end 42b. This allows the bottom member 41 to be easily fitted inside the body member 42.

The inclined part 41d is flattened while tilting a part of the curve part 41c inward. In the inner joining end 40a, providing such an inclined part 41d facilitates the alignment of the inner joining end 40a of the bottom member 41 with the outer joining end 40b of the body member 42 before welding.

Note that in the present embodiment, although the structure is provided with the curve part 41c and the inclined part 41d, it suffices if the open end 41b is bent inward to facilitate the fitting of the bottom member 41 and the body member 42. Therefore, it is also possible to provide the inclined part 41d alone and omit the curve part 41c.

The lower open end 42b is positioned below the body member 42 and is formed linearly in the vertical direction in the cross-sectional view. Moreover, the body member 42 also has a taper part 42c that gradually reduces in diameter upward from this lower open end 42b.

The abutting part 41a of the inner joining end 40a is positioned at a corner 41e between the bottom 4a and the inclined part 41d of the bottom member 41, or at the inclined part 41d. In contrast, the abutting part 42a of the outer joining end 40b is positioned at the lower open end 42b of the body member 42.

Therefore, the bottom member 41 and the body member 42 can be joined by aligning the radial positions of the abutting part 41a and the abutting part 42a, making the adjustment of the radial dimensions easier. For example, during the manufacturing process, if the outer diameter of the bottom member 41 becomes larger than the outer diameter of the body member 42, it is possible to reduce the outer diameter by adjusting the position of the corner of the inclined part 41d of the bottom member 41. Note that the abutting part 41a of the inner joining end 40a may be provided at the inclined part 41d or at the corner 41e.

The bottom 4a of the bottom member 41 is provided with a concentric uneven structure. In the present embodiment, a concave part 41f is provided on the bottom 4a of the bottom member 41, where a part is recessed upward in a circular ring shape. In the insulation container 1A of the present embodiment, by providing such an uneven structure including the concave part 41f on the bottom 4a of the bottom member 41, it is possible to enhance the strength of the bottom 4a of the bottom member 41 through work hardening.

Note that the uneven structure is not limited to the configuration with the abovementioned concave part; for example, a configuration in which a part of the bottom 4a of the bottom member 41 protrudes downward in a circular ring shape may also be employed.

In the insulation container 1A of the present embodiment, the abutting parts 41a, 42a of the inner joining end 40a and the outer joining end 40b are joined with the outer surface of the inclined part 41d facing the inner surface of the lower open end 42b. For the joining of the inner joining end 40a and the outer joining end 40b, welding methods such as laser welding are used.

Note that the abutting parts 41a, 42a may be joined at the corner 41e and the inner surface side of the lower open end 42b, or at the tip of the inclined part 41d and the lower open end 42b.

Note that in Fig. 3, the joining parts (boundaries) between the inner joining end 40a and the outer joining end 40b are illustrated, and after joining, the abutting parts 41a, 42a between the inner joining end 40a and the outer joining end 40b are melted by welding, forming a weld bead around the entire circumference. Moreover, this weld bead is then finished to a smooth surface through grinding and polishing after welding.

Note that in the insulation container 1A of the present embodiment, the lower open end 42b has a straight shape extending vertically to facilitate the alignment of the abutting parts 41a, 42a; however, it may also have a tapered or rounded shape.

As described above, in the insulation container 1A of the present embodiment, the inner joining end 40a of the bottom member 41 and the outer joining end 40b of the body member 42 constituting the outer container 4 can be joined with high precision, allowing a well-finished joining part to be obtained.

In particular, in the insulation container 1A of the present embodiment, since the joining part between the bottom member 41 and the body member 42 constituting the outer container 4 is positioned at the outermost peripheral part (periphery) on the lower surface side of the bottom 4a, no step is formed at the joining part, so there is no need to attach a bottom cover to cover the joining part.

In the insulation container 1A of the present embodiment, it is possible to simplify the manufacturing process and reduce manufacturing costs while preventing the weld bead from becoming large. Furthermore, by reducing the thickness of the outer container 4 and the inner container 5, it is possible to reduce the weight of this insulation container 1A and improve its insulation performance.

In particular, with the insulation container 1A of the present embodiment, by constructing the outer container 4 with separate members, the bottom member 41 and the body member 42, it is possible to make the bottom member 41 thicker where strength is required than the body member 42, or to form the outer container 4 in a tapered shape.

Furthermore, in the insulation container 1A of the present embodiment, while the body member 42 has a substantially tapered shape, by adjusting the joining angle of the abutting parts 41a, 42a, the outer container 4 may have a substantially cylindrical shape or an inverted tapered shape that gradually reduces in diameter downward.

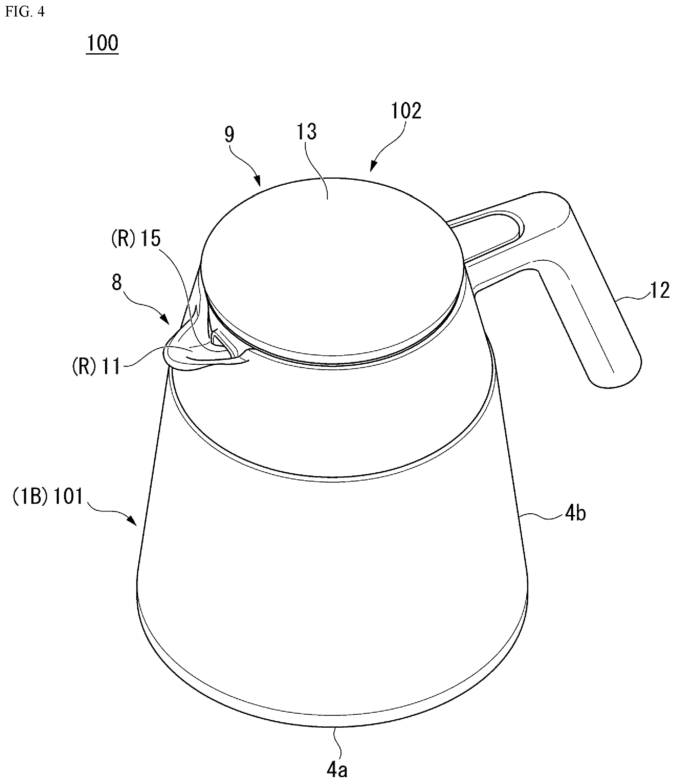

(Embodiment 2) Next, as Embodiment 2 of the present invention, for example, the capped container 100 equipped with an insulation container 1B illustrated in Figs. 4 to 6 will be described.

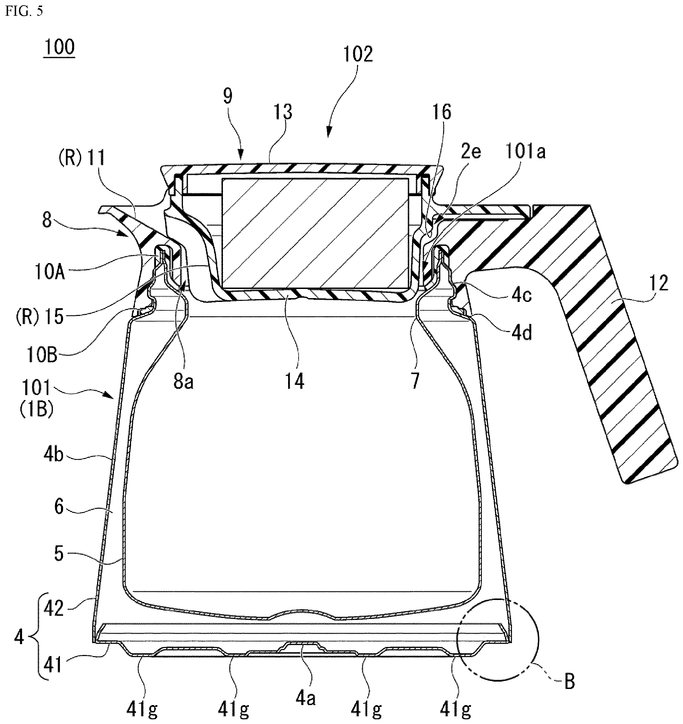

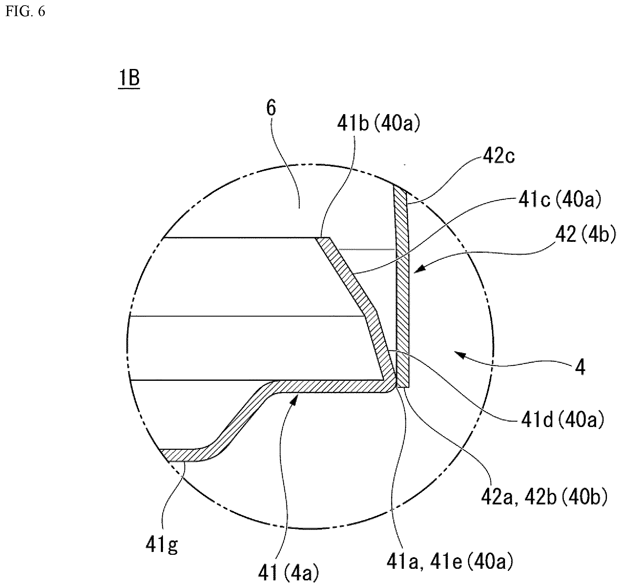

Note that Fig. 4 is a perspective view illustrating the appearance of the capped container 100. Fig. 5 is a cross-sectional view illustrating the structure of the capped container 100. Fig. 6 is a cross-sectional view of the insulation container 1B with the encircled area B illustrated in Fig. 5 enlarged. In the following description, parts equivalent to those in the insulation container 1A mentioned above will be omitted, with the same reference numerals used in the drawings.

The capped container 100 of the present embodiment, as illustrated in Figs. 4 to 6, comprises a container body 101 composed of the insulation container 1B of the present embodiment and a cap unit 102 attached to the container body 101; wherein the container body 101 with a vacuum insulation structure applies the present invention to a tabletop pot (beverage container) capable of keeping the beverage (liquid) contained in the container body 101 warm or cold.

Note that in the capped container 100 of the present embodiment, the side provided with the pouring mouth 11, described later, is treated as the "front side," while the side provided with the handle part 12 positioned opposite a pouring mouth 11 is treated as the "rear side."

The container body 101, as in the container body 2 mentioned above, is composed of a double-structure container, for example, having a bottomed cylindrical outer container 4 and an inner container 5 made of stainless steel, etc., with the inner container 5 housed inside the outer container 4 and the open ends of both containers joined together. Moreover, a vacuum insulation layer 6 is provided between the outer container 4 and the inner container 5. The vacuum insulation layer 6 can be formed by sealing the degassing hole provided at the bottom 4a of the outer container 4 in a chamber depressurized (evacuated) to a high vacuum, for example.

In the present embodiment, the insulation container 1B constituting the container body 101 consists of the outer container 4 and the inner container 5, both formed in a bottomed cylindrical shape, wherein the outer container 4 has a taper shape that gradually reduces in diameter upward.

The outer container 4 constituting the container body 101 has a substantially circular bottom 4a, a substantially cylindrical body 4b rising from the outer periphery of the bottom 4a, a substantially cylindrical neck part 4c with a reduced diameter at the upper side of the body 4b, and a shoulder part 4d that gradually reduces in diameter from the body part 4b to the neck part 4c. Furthermore, the upper end of the neck part 4c is circularly open as the upper opening 101a of the container body 101.

In contrast, the inner container 5 constituting the container body 101 has a shape in which the inner peripheral side of the neck part 4c is reduced in diameter compared to the inner peripheral side of the body part 4b. The inner container 5 also has a protruding part 7 that extends over the entire circumference of the inner peripheral side of the neck part 4c.

Note that the shape of the container body 101 is not particularly limited, with modifications capable of being made to the shape of the insulation container 1B as appropriate in order to match the size, design, etc. Moreover, the outer surface of the outer container 4 may also be painted, printed, etc.

In the insulation container 1B of the present embodiment, the outer container 4 is composed of a bottomed cylindrical bottom member 41 forming the bottom 4a side and a cylindrical body member 42 forming the body part 4b side.

In the insulation container 1B of the present embodiment, with the inner container 5 housed inside the body member 42 and the open ends of both containers facing each other, this abutting part is joined by welding. Subsequently, with the bottom member 41 and the body member 42 fitted together, the abutting parts are joined by welding, thereby forming the outer container 4 and the container body 101.

Note that in Fig. 4, the joining parts (boundaries) between the inner container 5 and the body member 42 and between the bottom member 41 and the body member 42 are illustrated, and after welding, these joining parts are melted by welding, forming a weld bead around the entire circumference of the joining parts. Moreover, this weld bead is then finished to a smooth surface through grinding and polishing after welding.

The cap unit 102 includes a cap body 8 attached to the neck part 4c of the container body 101 and a lid 9 fitted inside the cap body 8 through a liquid passage 8a provided in the cap body 8.

The cap body 8 is a shoulder member made of heat-resistant resin, for example, and forms a circular liquid passage 8a that communicates with the inside of the container body 2, while being attached to the neck part 4c of the container body 101 through a mouth packing 10A and a shoulder packing 10B.

The cap body 8 includes a pouring mouth 11 for pouring the beverage inside the container body 101 to the outside, along with a handle part 12 that is grasped by the user.

The pouring mouth 11 is positioned on the front side surface of the cap body 8 and projects in the enlarging direction from one end of the upper part of the liquid passage 8a. The handle part 12 is provided on the opposite side of the pouring mouth 11, i.e., protruding rearward and extending downward from the rear side surface of the cap body 8.

The lid 9 is a stopper with an insulating structure and is detachably attached to the cap body 8 to open and close the liquid passage 8a.

Specifically, the lid 9 includes an upper lid 13 and a middle stopper 14 made of heat-resistant resin, for example, and when the middle stopper 14 is fitted inside the cap body 8 through the liquid passage 8a, the lid 9 can close the liquid passage 8a.

The lid 9 has a liquid passage groove 15 that, together with the pouring mouth 11, forms a flow path R for discharging the beverage from the container body 2, along with an air vent groove 16 for introducing external air into the container body 2.

In the cap unit 102, when the middle stopper 14 is fitted inside the cap body 8 through the liquid passage 8a, a flow path R is formed between the pouring mouth 11 and the liquid passage groove 15, which face each other.

Incidentally, in the insulation container 1B of the present embodiment, as illustrated in Fig. 6, the outer container 4 has an inner joining end 40a and an outer joining end 40b that are joined together at the abutting parts 41a, 42a between the bottom member 41 and the body member 42.

Specifically, the inner joining end 40a includes a curve part 41c formed by bending the open end 41b of the bottom member 41 inward while folding it upward from the periphery of the bottom 4a of the bottom member 41, along with an inclined part 41d formed by flattening a part of the outer surface of the curve part 41c. In contrast, the outer joining end 40b includes a lower open end 42b extending vertically downward from the body member 42. Moreover, the body member 42 also has a taper part 42c that gradually reduces in diameter upward from this lower open end 42b.

The abutting part 41a of the inner joining end 40a is positioned at a corner 41e between the bottom 4a of the bottom member 41 and the inclined part 41d, or at the inclined part 41d. In contrast, the abutting part 42a of the outer joining end 40b is positioned at the lower open end 42b of the body member 42.

Therefore, the bottom member 41 and the body member 42 can be joined by aligning the radial positions of the abutting part 41a and the abutting part 42a, making the adjustment of the radial dimensions easier. For example, during the manufacturing process, if the outer diameter of the bottom member 41 becomes larger than the outer diameter of the body member 42, it is possible to reduce the outer diameter by adjusting the position of the corner of the inclined part 41d of the bottom member 41. Note that the abutting part 41a of the inner joining end 40a may be provided at the inclined part 41d or at the corner 41e.

The bottom 4a of the bottom member 41 is provided with a concentric uneven structure. In the present embodiment, two concentric circular ring-shaped protrusions 41g are provided side by side on the bottom 4a, extending downward. In the insulation container 1B of the present embodiment, by providing such an uneven structure including the protrusions 41g on the bottom 4a of the bottom member 41, it is possible to enhance the strength of the bottom 4a of the bottom member 41 through work hardening.

In the insulation container 1B of the present embodiment, the abutting parts 41a, 42a of the inner joining end 40a and the outer joining end 40b are joined with the outer surface of the inclined part 41d facing the inner surface of the lower open end 42b.

Note that the abutting parts 41a, 42a may be joined at the corner 41e and the inner surface side of the lower open end 42b, or at the tip of the inclined part 41d and the lower open end 42b.

Note that in Fig. 6, the joining parts (boundaries) between the inner joining end 40a and the outer joining end 40b are illustrated, and after joining, the abutting parts 41a, 42a between the inner joining end 40a and the outer joining end 40b are melted by welding, forming a weld bead around the entire circumference. Moreover, this weld bead is then finished to a smooth surface through grinding and polishing after welding.

Note that in the insulation container 1A of the present embodiment, the lower open end 42b has a straight shape extending vertically to facilitate the alignment of the abutting parts 41a, 42a; however, it may also have a tapered or rounded shape.

As described above, in the insulation container 1B of the present embodiment, the inner joining end 40a of the bottom member 41 and the outer joining end 40b of the body member 42 constituting the outer container 4 can be joined with high precision, allowing a well-finished joining end part to be obtained.

In particular, in the insulation container 1B of the present embodiment, since the joining part between the bottom member 41 and the body member 42 constituting the outer container 4 is positioned at the outermost peripheral part (periphery) on the lower surface side of the bottom 4a, no step is formed at the joining part, so there is no need to attach a bottom cover to cover the joining part.

In the insulation container 1B of the present embodiment, it is possible to simplify the manufacturing process and reduce manufacturing costs while preventing the weld bead from becoming large. Furthermore, by reducing the thickness of the outer container 4 and the inner container 5, it is possible to reduce the weight of this insulation container 1B and improve its insulation performance.

In particular, in the insulation container 1B of the present embodiment, by constructing the outer container 4 with separate members, the bottom member 41 and the body member 42, it is possible to make the bottom member 41 thicker where strength is required than the body member 42, or to form the outer container 4 with a tapered shape.

Furthermore, in the insulation container 1A of the present embodiment, while the body member 42 has a substantially tapered shape, by adjusting the joining angle of the abutting parts 41a, 42a, the outer container 4 may have a substantially cylindrical shape or an inverted tapered shape that gradually reduces downward.

Note that the present invention is not necessarily limited to the above embodiment, with various modifications capable of being made without departing from the spirit of the present invention.

For example, in Embodiment 1, the insulation container 1A applied to the abovementioned mug is illustrated; however, the present invention can also be widely applied to insulation containers such as teacups or tumblers.

In contrast, in Embodiment 2, the capped container 100 applied to the abovementioned tabletop pot is illustrated; however, the present invention can also be widely applied to capped containers with a cap unit attached to a container body with an upper opening.

### [Reference Signs List]

1A,1B...insulation container 2... container body 3...handle member 4... outer container 5...inner container 6... vacuum insulation layer 40a...inner joining end 40b...outer joining end 41...bottom member 41a...abutting part 41b...open end 41c...curve part 41d...inclined part 42...body member 42a... abutting part 42b...lower open end 42c...taper part 100...capped container 101... container body 102...cap unit

## Claims

1. An insulation container having a metal outer container and inner container with one open end, wherein the inner container is housed inside the outer container and the open end sides of both the outer container and the inner container are joined together, with a vacuum insulation layer provided between the outer container and the inner container,
wherein the outer container includes a bottomed cylindrical bottom member forming the bottom side and a cylindrical body member forming the body part side,
wherein the bottom member has an inner joining end formed by bending the open end of the bottom member inward while folding it upward from the periphery of the bottom of the bottom member, along with an outer joining end including the lower open end of the body member, and
wherein the outer surface of the inclined part and the inner surface of the lower open end face each other, and the abutting parts between the inner joining end and the outer joining end are joined together.

2. The insulation container according to claim 1, wherein the abutting part of the inner joining end is positioned at a corner in which the bottom of the bottom member is bent or at the inclined part.

3. The insulation container according to claim 1 or claim 2, wherein the lower open end extends vertically downward.

4. The insulation container according to any preceding claim, wherein the open end of the bottom member is bent so as to be positioned between the inner surface of the bottom and the lower open end of the body member.

5. The insulation container according to any preceding claim, wherein the body member has a taper part gradually reducing in diameter upward.

6. The insulation container according to any preceding claim, wherein the bottom member has a concentric uneven structure on the bottom thereof.

7. A capped container comprising: the insulation container according to any one of claims 1 to 6; and
a cap unit attached to the insulation container.
